# EUROPÄISCHE PATENTANMELDUNG

(11) **EP 3 865 710 A1**
(43) Veröffentlichungstag der Anmeldung: **18.08.2021**
(21) Anmeldenummer: 20156734.4
(22) Anmeldetag: 11.02.2020
(51) Int. Cl.: F04D 17/10, F04D 29/047, F04D 29/58, F16C 17/14, F16C 32/06, F04D 25/06, F16C 37/00, F04D 29/057, F04D 29/063, F16C 33/10

(54) **VERDICHTER**

(71) Anmelder: BMTS Technology GmbH & Co. KG, 70376 Stuttgart (DE)
(72) Erfinder: Schmitt, Steffen, 71254 Ditzingen (DE); Frieder, Stetter, 70597 Stuttgart (DE); Kuhne, Oliver, 70374 Stuttgart (DE); Kleinschmidt, Rüdiger, 74354 Besigheim (DE); Winkler, Gunter, 70193 Stuttgart (DE)
(74) Vertreter: Herrmann, Jochen

(57) **Zusammenfassung**

Die Erfindung betrifft einen Verdichter (20) zur Erzeugung einer Druckluftströmung für eine Brennstoffzelle (10), mit einem Verdichterelement (21), insbesondere einem Verdichterrad, wobei das Verdichterelement (21) mit einer Antriebswelle (23) drehfest gekoppelt ist, wobei die Antriebswelle (23) von einem Motor (22), insbesondere einem Elektromotor, angetrieben wird, wobei die Welle (23) mittels zumindest einem hydrodynamischen oder hydrostatischen Gleitlager (24, 25) drehbar gelagert ist, wobei das Gleitlager (24, 25) an eine Schmiermittelversorgung (30) angeschlossen ist, über die das Gleitlager (24, 25) mit einem Schmiermittel zur hydrodynamischen oder hydrostatischen Druckerzeugung versorgt wird, wobei das Schmiermittel Wasser oder ein Fluidgemisch, überwiegend aufweisend Wasser ist, wobei das Gleitlager (24, 25) einen Schmiermitteleintritt und einen Schmiermittelaustritt aufweist, wobei dem Gleitlager (24, 25) das Schmiermittel über den Schmiermitteleintritt zuleitbar und über den Schmiermittelaustritt das Schmiermittel vom Gleitlager (24, 25) ableitbar ist, und wobei im Bereich des Schmiermittelaustritts ein Ableitbereich des Kreislaufsystems (30) angeordnet ist. Eine betriebssichere Bauweise kann für einen solchen Verdichter dann verwirklicht werden, wenn vorgesehen ist, dass der gesamte Austrittsquerschnitt des Flüssigkeitsaustritts des Gleitlagers (24, 25) vollständig von dem im Ableitbereich gehaltenen Schmiermittel bedeckt ist.

## Beschreibung

Die Erfindung betrifft einen Verdichter zur Erzeugung einer Druckluftströmung für eine Brennstoffzelle mit einem Verdichterelement, insbesondere einem Verdichterrad, wobei das Verdichterelement mit einer Antriebswelle drehfest gekoppelt ist, wobei die Antriebswelle von einem Motor, insbesondere einem Elektromotor, angetrieben wird, wobei die Welle mittels zumindest einem hydrodynamischen oder hydrostatischen Gleitlager drehbar gelagert ist, wobei das Gleitlager an eine Schmiermittelversorgung angeschlossen ist, über die das Gleitlager mit einem Schmiermittel zur hydrodynamischen oder hydrostatischen Druckerzeugung versorgt wird, wobei das Schmiermittel Wasser oder ein Fluidgemisch, überwiegend aufweisend Wasser ist, wobei das Gleitlager einen Schmiermitteleintritt und einen Schmiermittelaustritt aufweist, wobei dem Gleitlager das Schmiermittel über den Schmiermitteleintritt zuleitbar und über den Schmiermittelaustritt das Schmiermittel vom Gleitlager ableitbar ist, und wobei im Bereich des Schmiermittelaustritts ein Ableitbereich des Kreislaufsystems angeordnet ist.

Eine mit reinem Wasserstoff betriebene Brennstoffzelle gilt heute als Antrieb der Zukunft, da sie nur reinen Wasserdampf emittiert. Der Brennstoffzelle wird in einem Reaktionsraum Wasserstoff und Luft zugeführt. Es hat sich gezeigt, dass sich die Leistungsdichte und damit der Wirkungsgrad der Brennstoffzelle dann steigern lassen, wenn die Luft unter Druck zugeführt wird. Zur Bereitstellung der Druckluft wird ein Aufladeaggregat benötigt. Üblicherweise kommt dabei ein elektrischer Verdichter oder ein Turbo-Verdichter zum Einsatz. Bei elektrischen Verdichtern wird das Verdichterelement von einem Elektromotor angetrieben. Als Verdichterelemente sollen im Sinne der Erfindung insbesondere Verdichterräder oder Schrauben Verdichter verstanden werden. Verdichterräder können im Rahmen der Erfindung insbesondere solche Verdichterräder sein, die Luft entlang ihrer Drehachse ansaugen und anschließend komprimierte Druckluft radial abblasen. Solche Verdichterräder werden üblicherweise auch als Radiallüfter bezeichnet.

Zur Lagerung der Welle, auf welcher das Verdichterelement gelagert ist, werden im Stand der Technik unterschiedliche Lagertypen eingesetzt. Bekannt sind Lager mit Wälzkörpern oder Gleitlager. Gleitlager sind dabei aufgrund der vorherrschenden hohen Drehzahlen überlegen. Die dabei eingesetzten hydrodynamischen Gleitlager benötigen ein Schmiermittel, das im hydrodynamischen Spalt zwischen dem Rotor und dem Stator des Gleitlagers geführt ist. Üblicherweise wird Öl als Schmiermittel eingesetzt. Bei der Verwendung von Öl besteht die Gefahr, dass über Leckagen Öl in den Luftkreislauf gelangt und der Brennstoffzelle zugefördert wird. Eine Kontamination der Membran der Brennstoffzelle mit Öl führt zu deren Zerstörung.

Es sind daher aus dem Stand der Technik Lösungen bekannt, bei denen als Schmiermittel Wasser verwendet wird. So beschreibt EP 2 600 015 A1 einen Turboverdichter für ein Brennstoffzellensystem, bei dem die Antriebswelle des Verdichters auf mit Wasser geschmierten Gleitlagern gelagert ist.

Eine ähnliche Lösung ist in der DE 10 2009 051 560 A1 offenbart. In diesem Dokument ist auch beschrieben, dass dem Wasser ein Zusatz zugemischt sein kann, beispielsweise Frostschutzmittel. Im Sinne der Erfindung soll daher unter den Begriff Wasser auch insbesondere eine wässrige Lösung verstanden werden, bei der dem Wasser ein oder mehrere Zusatzstoffe, insbesondere Frostschutzmittel zugegeben werden ist. Insbesondere kann es dabei vorgesehen sein, dass der Zusatzstoff keine schädigende Wirkung für die Membran der Brennstoffzelle hat.

Es hat sich gezeigt, dass bei der Verwendung von Wasser, besonders bei hochdrehenden Verdichterelementen es zu Lagerausfällen kommt.

Es ist daher Aufgabe der Erfindung, einen Verdichter der eingangs erwähnten Art bereitzustellen, mit dem sich bei der Verwendung von Wasser als Schmiermittel in den Gleitlagern eine zuverlässige Betriebsweise gibt.

Diese Aufgabe wird erfindungsgemäß dadurch gelöst, dass der gesamte Austrittsquerschnitt des Flüssigkeitsaustritts des Gleitlagers oder der Gleitlager vollständig von dem im Ableitbereich gehaltenen Schmiermittel bedeckt ist.

Die Erfinder haben erkannt, dass bei den aus dem Stand der Technik bekannten technischen Lösungen im Anschluss an den Schmiermittelaustritt aus den Gleitlagern es bei bestimmten Betriebssituationen zu einer Schaumbildung im Schmiermittel kommen kann. Die dabei entstehenden Luftblasen werden im Schmiermittelkreislauf mitgeführt und anschließend wieder dem Gleitlager zugeleitet. Aufgrund der unzureichenden Schmierfähigkeit der Luft fällt die Tragfähigkeit des Gleitlagers dann ab. In Folge kann es zu einer Beschädigung der Lagerflächen (Lagerfressen) kommen. In Kenntnis dieses Problems haben die Erfinder überraschenderweise herausgefunden, dass eine Schaumbildung dann deutlich reduziert oder verhindert werden kann, wenn der gesamte Austrittsquerschnitt des Flüssigkeitsaustritts des Gleitlagers vollständig mit Schmiermittel bedeckt ist. Auf diese Weise wird effektiv eine Lagerbeschädigung verhindert.

Gemäß einer besonders bevorzugten Erfindungsalternative kann es vorgesehen sein, dass das Kreislaufsystem vollständig mit Schmiermittel gefüllt und entlüftet ist. Auf diese Weise sichergestellt, dass sich keine Luft in Bereichen der Schmiermittelversorgung sammelt, die unbeabsichtigt mitgeführt und zu den Gleitlagern transportiert wird.

Wenn dabei vorgesehen ist, dass das Kreislaufsystem einen Entlüftungsanschluss, zum Anschluss einer Entlüftungsleitung aufweist, dann kann das System einfach befüllt und auch gewartet werden.

Besonders bevorzugt kann es nach der Erfindung vorgesehen sein, dass die Schmiermittelversorgung ein geschlossenes Kreislaufsystem bildet. Das geschlossene System garantiert eine kontinuierliche Schmiermittelversorgung. Insbesondere ist verhindert, dass unbeabsichtigt Stoffe in die Schmiermittelversorgung eingetragen werden, die eine Schädigung der Membran der Brennstoffzelle bewirken können.

Besonders bevorzugt kann es vorgesehen sein, dass das Schmiermittel derart unter Druck gehalten ist, dass der Schmiermitteldruck zumindest im Bereich des Austrittsquerschnitts des Flüssigkeitsaustritts des Gleitlagers größer ist, als der Umgebungsdruck, und dass der Schmiermitteldruck zumindest im Bereich des Austrittsquerschnitts vorzugsweise zumindest 0,5 bar und weiter bevorzugt maximal 5 bar beträgt. Es hat sich gezeigt, dass bei einer entsprechenden Aufbringung eines Schmiermitteldrucks die Schaumbildung im Anschluss an das Gleitlager zusätzlich wirkungsvoll unterdrückt werden kann. Infolge dieser Maßnahme wird erreicht, dass nahezu keine schädliche Blasenbildung mehr entsteht. Die Betriebssicherheit wird dadurch weiter gesteigert. Vorzugsweise ist es so, dass ein geschlossenes Schmiermittel-Kreislaufsystem verwendet ist. Dies wurde vorstehend bereits erwähnt. Bei Verwendung eines solchen geschlossenen Schmiermittel-Kreislaufsystems empfiehlt es sich, das gesamte Kreislaufsystem unter Druck zu setzen, wobei die vorstehenden Druckangaben berücksichtigt werden sollten.

Eine denkbare Erfindungsvariante ist dergestalt, dass eine Entgasungseinrichtung vorgesehen ist, der das vom Schmiermittelaustritt des Gleitlagers abgeführte Schmiermittel zugeleitet ist, und dass in der Entgasungseinrichtung das im Schmiermittel transportierte Gas zumindest teilweise aus dem Schmiermittel abgeschieden wird. Mit dieser Maßnahme wird der Gasgehalt im Schmiermittel weiter reduziert. Dabei können gängige Entlassungsverfahren eingesetzt werden.

Beispielsweise kann in einem Bereich des Kreislaufsystems eine Abscheidung von in dem Schmiermittel mitgeführtem Gas unter Unterdruck erfolgen.

Es hat sich gezeigt, dass eine blasenfreie Schmiermittelversorgung dadurch unterstützt wird, dass das zumindest eine Gleitlager in einem Lagergehäuse angeordnet ist, und dass eine Schmiermittelzuleitung der Schmiermittelversorgung in Schwerkraftrichtung unterhalb des Gleitlagers dem Gleitlager das Schmiermittel zuführt.

Zusätzlich oder alternativ kann es zu diesem Zweck auch vorgesehen sein, dass das zumindest eine Gleitlager in einem Lagergehäuse angeordnet ist, dass das Schmiermittel über eine Schmiermittelableitung abgeleitet wird, und dass die Schmiermittelableitung das Schmiermittel in Schwerkraftrichtung oberhalb des Gleitlagers von dem Gleitlager ableitet.

Im Rahmen der Erfindung ist es auch denkbar, dass eine Schmiermittelpumpe vorgesehen ist, die dem zumindest einen Gleitlager das Schmiermittel zufördert, und dass die Schmiermittelpumpe vorzugsweise in geodätischer Höhe unterhalb des Gleitlagers angeordnet ist.

Nach einer bevorzugten Erfindungsvariante kann es vorgesehen sein, dass in Strömungsrichtung vor dem zumindest einen Gleitlager ein Wärmetauscher angeordnet ist, durch den das Schmiermittel geleitet ist, um ihm Wärme zu entziehen. Auf diese Weise kann mit dem Schmiermittel gleichzeitig auch eine effektive Kühlung des Gleitlagers bewirkt werden.

Wenn vorgesehen ist, dass in einem Verdichtergehäuse das Verdichterelement und die Antriebswelle sowie der Motor, insbesondere der Elektromotor, angeordnet sind, dass die Schmiermittelversorgung ein geschlossenes Kreislaufsystem mit einer Schmiermittelpumpe bildet, und dass das Kreislaufsystem in oder an dem Verdichtergehäuse verbaut ist, dann lässt sich der Verdichter einfach handhaben. Beispielsweise kann die Ausgestaltung im einfachsten Fall dann so vorgenommen werden, dass zum Anschluss an das Brennstoffzellensystem lediglich eine Kopplung der Luftführung, in dem das Verdichterelement angeordnet ist, vorgenommen werden.

Im Rahmen der Erfindung kann auch ein Turbo-Verdichter eingesetzt werden, bei dem auf der Welle, die auch das Verdichterrad trägt eine Turbine verbaut ist. Der aus der Brennstoffzelle kommende Abgasstrom kann, der Turbine zugeführt werden. Hierdurch lässt sich die Leistungsaufnahme des Elektromotors verringern. Wird eine solche Bauweise verwendet, so kann es beispielsweise vorgesehen sein, dass auch die Turbine im Verdichtergehäuse gelagert ist. Die Luftführung der Turbine kann dann ebenfalls an die Brennstoffzelle angeschlossen werden.

In bevorzugter Weiterbildung der Erfindung kann es vorgesehen sein, dass der als Elektromotor ausgebildete Motor zum Antrieb des Verdichterelements an eine Leistungselektronik angeschlossen ist, wobei die Leistungselektronik vorzugsweise an oder in dem Verdichtergehäuse befestigt ist, wobei der Leistungselektronik ein Wärmetauscher zugeordnet ist, der in wärmetauschendem Kontakt mit einem wärmeerzeugenden Bereich der Leistungselektronik steht, und dass in Strömungsrichtung nach dem Wärmetauscher dem oder den Gleitlager/-n das Schmiermittel als Kühlmittel zugeleitet ist. Hierdurch lässt sich der Teileaufwand für den Verdichter weiter reduzieren.

Erfindungsgemäß kann es auch vorgesehen sein, dass dem als Elektromotor ausgebildete Motor zum Antrieb des Verdichterelements ein Wärmetauscher zugeordnet ist, und dass durch diesen Wärmetauscher das dem oder den Gleitlager/- n zugeleitete oder das von dem oder den Gleitlagern abgeleitete Schmiermittel als Kühlmittel zugeleitet ist. Somit wird der Elektromotor direkt durch das Schmiermittel gekühlt.

Die Lagerung für die Welle des Verdichterelements kann von einem hydrodynamischen Gleitlager gebildet sein. Besonders bevorzugt ist es dabei vorgesehen dass das oder die Gleitlager als hydrodynamische Gleitlager ausgebildet ist/sind, wobei das oder die hydrodynamisches Gleitlager einen Rotor und einen Stator aufweist, wobei der Rotor gegenüber dem Stator drehbar ist, wobei eine Rotor-Lagerfläche einer Gegenfläche des Stators zur hydrodynamischen Druckerzeugung im Bereich eines konvergierenden Spaltes gegenübersteht, dass die Rotor-Lagerfläche und/oder die Gegenfläche bei einem Schnitt längs und durch die Rotationsachse in Schnittansicht, eine durchgehende Lagerkontur bildet, die vorzugsweise aus wenigstens zwei Konturabschnitten gebildet ist, die besonders bevorzugt als Gerade und Wölbung oder als Wölbungen ausgebildet sind, um hydrodynamische Tragfähigkeiten in radialer und axialer Richtung zu erzeugen, wobei vorzugsweise vorgesehen ist, dass die Lagerkontur bei einem Schnitt längs und durch die Rotationsachse in Schnittansicht, längs der Rotationsachse stetig differenzierbar ist.

Mit einer solchen Lagerung wird eine besonders hohe Tragkraft auf kleinstem Bauraum bewirkt. Insbesondere lassen sich die während des Betriebs auftretende Axial- und Radiallasten wechselnder Größe zuverlässig abtragen.

Besonders effektiv sind dabei auch Mehrflächengleitlager, mit deren Hilfe Instabilitäten des Schmierfilms und unwuchtinduzierte Vibrationen wirkungsvoll unterbunden werden können. Zu diesem Zweck kann es dementsprechend auch vorgesehen sein, dass die Rotor-Lagerfläche und die Gegenfläche des oder der Gleitlager ein Mehrflächengleitlager bilden.

Bei der erfindungsgemäßen Anordnung werden die Gleitlager mit einem Schmiermittel auf Wasserbasis geschmiert. Dennoch ist für die Verwendung des Verdichters zum Betrieb einer Brennstoffzelle die Abdichtung der Lagerung gegenüber dem Gas-Strömungspfad wesentlich. Wenn beispielsweise in dem Wasser ein Frostschutzmittel, beispielsweise Glykol enthalten ist, so führt dieses zwar nicht zur Zerstörung der Membran der Brennstoffzelle, reduziert jedoch deren Leistungsfähigkeit. Aus diesem Grund kann es vorgesehen sein, dass das Verdichterelement im Bereich einer Luftführung gehalten ist, die eine Luftzuführung und stromab des Verdichterelements eine Druckleitung aufweist, über die die vom Verdichterelement erzeugte Druckluft abführbar ist, dass die Welle aus einem Lagergehäuse, in dem das oder die Gleitlager angeordnet ist/sind herausgeführt und in den Bereich der Luftführung geführt ist, und dass der Wellendurchtritt von dem Lagergehäuse in den Bereich der Luftführung mittels einer Kombination, bestehend aus einer Gleitringdichtung und einer gasdynamischen Dichtung, abgedichtet ist. Hierdurch wird eine effektive Abdichtung auch für den Fall erreicht, dass das Schmiermittel in einem Schmiermittel-Kreislauf unter Überdruck gegenüber der Umgebung geführt ist. Denkbar ist auch ein Dichtkonzept, bei dem eine Dichtwirkung über am Verdichteraustritt abgegriffene Sperrluft verwirklicht wird.

Die Erfindung wird im Folgenden anhand von in den Zeichnungen dargestellten Ausführungsbeispiels näher erläutert. Es zeigen:
Figur 1 und 2 jeweils eine Blockbilddarstellung eines Brennstoffzellen-Systems mit einem Verdichter,
Figuren 3 bis 7 jeweils Blockbilddarstellungen eines Verdichters zum Einsatz in einem Brennstoffzellen-System gemäß Figur 1.

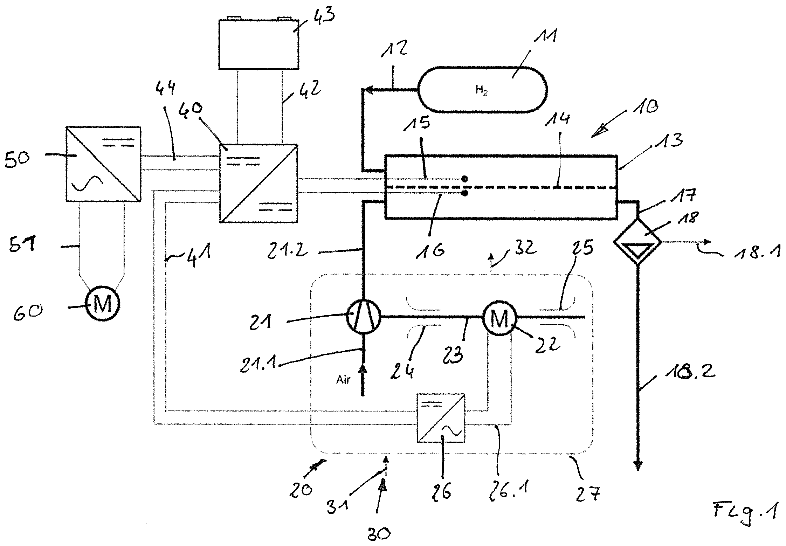

Figur 1 zeigt eine Brennstoffzelle 10 mit einer Reaktionskammer 13 in schematischer Darstellung. In der Reaktionskammer 13 ist eine Membran 14 angeordnet, die einen Anodenaum und einen Kathodenraum gegeneinander abgeteilt. In dem Anodenaum ist eine Anode 15 und in dem Kathodenraum eine Katode 16 gehalten. Dem Anodenaum kann Wasserstoff von einem Wasserstofftank 11 über eine Zuleitung 12 zugeleitet werden.

Von einem Verdichter 20 kommend kann dem Kathodenraum Druckluft zugeleitet werden. Aus der Reaktionskammer 13 führt eine Ableitung 17 heraus. Über diese Ableitung 17 kann das während der chemischen Reaktionen in der Brennstoffzelle 10 erzeugte Abgas in Form von Wasserdampf abgeleitet werden.

In die Ableitung 17 kann ein Wasserabscheider 18 integriert sein. Der Wasserscheider 18 weist einen Wasserabfluss 18.1 auf. Über diesen kann das abgeschiedene Wasser abgeleitet werden. Weiterhin weist der Wasserscheider 18 eine Gasleitung 18.2 auf. Über diese kann die im Wasserscheider 18 abgeschiedene Gasphase abgeleitet werden.

Die Anode 15 und die Kathode 16 sind an einen Spannungswandler 40 angeschlossen. Über den Spannungswandler 40 kann mittels eines Kabels 42 eine Batterie 43 angeschlossen werden. Dementsprechend kann die Batterie 43 während des Betriebs von der Brennstoffzelle 10 geladen werden. Weiterhin kann an den Spannungswandler 40 auch ein Wechselrichter 50 über ein Kabel 44 angeschlossen werden. In dem Wechselrichter 50 wird der von der Brennstoffzelle 10 erzeugte Gleichstrom, bzw. der von der Batterie 43 abgegebene Gleichstrom, in Wechselstrom gewandelt. Dieser Wechselstrom wird über ein Stromkabel 51 an einen Elektromotor 60 geleitet. Der Elektromotor 60 kann beispielsweise das Antriebsaggregat eines Kraftfahrzeugs sein.

Der Verdichter 20 besitzt ein Verdichtergehäuse 27. In dem Verdichtergehäuse 27 ist ein Lagergehäuse (nicht dargestellt) angeordnet. Das Lagergehäuse weist zwei zueinander beabstandet angeordnete Gleitlager 24, 25 auf. Diese sind vorzugsweise als hydrodynamische Gleitlager 24, 25 ausgebildet. Mittels der Gleitlager 24, 25 wird eine Antriebswelle 23 im Lagergehäuse drehbar gelagert. An die Antriebswelle 23 ist ein Motor 22, nämlich ein Elektromotor angeschlossen.

Der Motor 22 treibt die Antriebswelle 23 an. Weiterhin ist mit der Antriebswelle 23 ein Verdichterelement 21 drehfest verbunden. Bei dem Verdichterelement 21 handelt es sich um ein Verdichterrad, vorzugsweise um einen Radiallüfter. Dieser Radiallüfter saugt Umgebungsluft entlang seiner Drehachse an. In dem Verdichterrad wird die angesaugte Luft komprimiert und radial abgeblasen. Die verdichtete Druckluft wird über eine Druckleitung 21.2 der Kathode, 16 der Brennstoffzelle 10 zugeführt. Die Zufuhr der Umgebungsluft erfolgt über eine Luftzuführung 21.2.

Der Motor 22 wird über eine Stromquelle gespeist. Im vorliegenden Ausführungsbeispiel wird hierzu als Stromquelle die Batterie 43 verwendet. Der Elektromotor 22 ist an eine Leistungselektronik 26 angeschlossen, die die Funktion des Elektromotors 22 steuert. Die Leistungselektronik 26 ist vorzugsweise an oder in dem Verdichtergehäuse 27 untergebracht. Von der Leistungselektronik 26 führt eine Stromleitung 26.1 zu dem Spannungswandler 14 (Kabel 41).

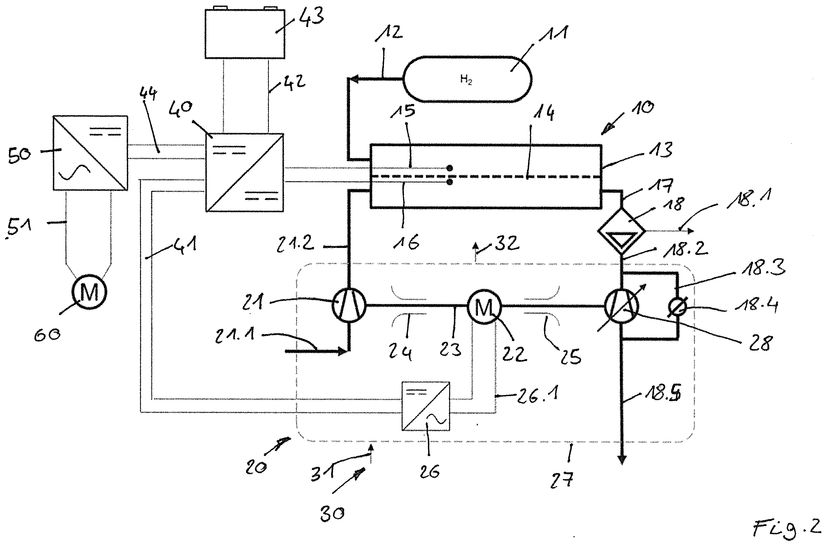

Figur 2 zeigt eine Ausgestaltung des Verdichters, die im Wesentlichen der Gestaltung des Verdichters gemäß Figur 1 entspricht. Zur Vermeidung von Wiederholungen kann daher auf die vorstehenden Ausführungen Bezug genommen werden. Es werden nachfolgend lediglich die Unterschiede näher erläutert.

Wie Figur 2 zeigt, wird die Gasleitung 18.2 in das Verdichtergehäuse 27 geführt und dort einer Turbine 28 zugeleitet. In der Turbine 28 kann das unter Druck stehende und aus der Brennstoffzelle 10 kommende Reaktionsgas entspannt werden. Das entspannte Gas wird über eine Gasführung 18.5 abgeleitet und aus dem Verdichtergehäuse 27 herausgeleitet.

Die Turbine 28 ist an die Antriebswelle 23 angeschlossen und mit dieser drehfest verbunden. Auf diese Weise kann die mechanische Antriebsleistung, welche in der Turbine 28 erzeugt wird auf die Antriebswelle 23 übertragen werden. Hierdurch wird der Elektromotor 22 entlastet und dessen Leistungsaufnahme damit reduziert.

Der Turbine 28 kann eine Bypassleitung 18.3 zugeordnet sein. Die Bypassleitung 18.3 verbindet, unter Umgehung der Turbine 28 die Gasleitung 18.2 mit der Gasführung 18.5. In der Bypassleitung 18.3 ist ein Ventil 18.4 integriert. Abhängig von den anstehenden Druckverhältnissen kann das Ventil 18.4 geöffnet oder geschlossen werden. Damit lässt sich die Turbine 28 entweder umgehen oder sie wird mit dem Reaktionsgas ganz oder teilweise durchströmt.

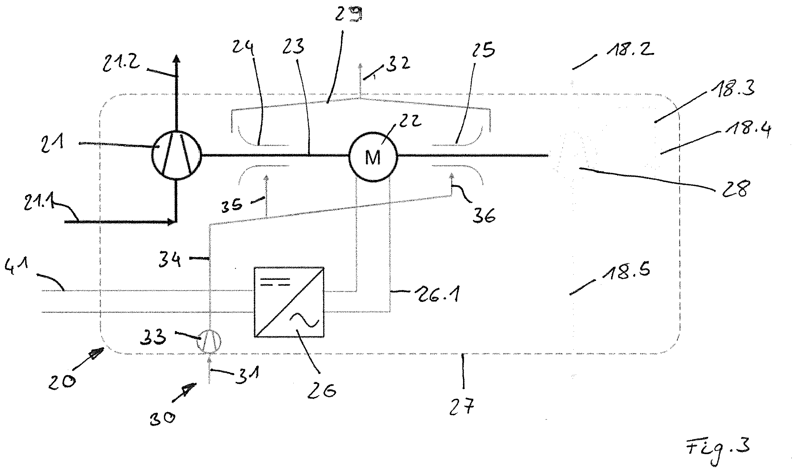

Figuren 3 bis 7 zeigen Varianten eines Verdichters 20. In diesen Darstellungen ist die Turbine 28 (sowie die Gasleitung 18.2, die Gasführung 18.5 und der Bypass 18.3) in gestrichelter Darstellung gezeigt. Diese gestrichelten Darstellungen sollen symbolisieren, dass zwei alternative Gestaltungen des Verdichters 20 möglich sind, nämlich einmal mit Turbine 28 und einmal ohne Turbine 28.

Die Ausgestaltungsformen gemäß den Figuren 3 bis 7 nehmen prinzipiell Bezug auf die Ausgestaltungsvarianten des Verdichters 20 gemäß den Figuren 1 und 2. Zur Vermeidung von Wiederholungen wird auf die vorstehenden Ausführungen Bezug genommen. Es werden lediglich die Änderungen, die in diesen Zeichnungen dargestellt sind, erläutert.

Figur 3 zeigt, dass den beiden Gleitlagern 24, 25 eine Schmiermittelversorgung 30 zugeordnet ist. Über die Schmiermittelversorgung 30 können die beiden Gleitlager 24, 25 mit dem benötigten Schmiermittel versorgt werden.

Im Rahmen der Erfindung kommt als Schmiermittel Wasser bzw. ein Wassergemisch zum Einsatz, wobei einem Wasser Zusatzstoffe, beispielsweise Frostschutzmittel zugesetzt sein können die Verwendung anderer Zusätze ist ebenfalls denkbar.

Die Schmiermittelversorgung 30 weist eine Schmiermittelzuleitung 31 auf, die in das Verdichtergehäuse 27 geführt ist. Im Verdichtergehäuse 27 ist die Schmiermittelzuleitung 31 an eine Schmiermittelpumpe 33 angeschlossen. Die Schmiermittelpumpe 33 pumpt das Schmiermittel in eine Pumpleitung 34. Von der Pumpleitung 34 gehen Stichleitungen 35, 36 ab, die jeweils zu einem Gleitlager 24, 25 geführt sind.

Wie Figur 3 erkennen lässt, ist die Schmiermittelpumpe 33 bei bestimmungsgemäßem Einbau des Verdichters 20 in geodätischer Höhe unterhalb der beiden Gleitlager 24, 25 angeordnet.

Während des Betriebs des Verdichters 20 rotiert die Antriebswelle 23 und mit dieser das Verdichterelement 21. Das Schmiermittel wird den Gleitlagern 24, 25 im Bereich ihres Schmiermitteleintritts zugeleitet. Infolge der Drehung der Antriebswelle 23 wird das Schmiermittel durch einen konvergierenden Spalt der hydrodynamischen Gleitlager 24, 25 hindurch gefördert. Das Schmiermittel verlässt die hydrodynamischen Gleitlager 24, 25 im Bereich ihres Schmiermittelaustritts. Dieser Schmiermittelaustritt mündet in einen Sammelbereich, in dem Schmiermittel gehalten ist. Das Schmiermittel überdeckt im Bereich des Sammelbereichs die gesamte Querschnittsfläche des Schmiermittelaustritts. Hierdurch wird eine Schaumbildung im Schmiermittel reduziert bzw. unterdrückt. Zusätzlich kann der Sammelbereich unter Überdruck gegenüber der Umgebung gesetzt sein. Hierdurch wird eine Unterdrückung der Schaumbildung weiter gefördert.

Im Anschluss an die Sammelbereiche der beiden Gleitlager 24, 25 fließt das Schmiermittel in einen Sammler 29. An den Sammler 29 ist eine Schmiermittelableitung 32 angeschlossen. Die Schmiermittelableitung 32 führt aus dem Verdichtergehäuse 27 heraus.

Wie Figur 3 erkennen lässt, ist vorzugsweise die Schmiermittelableitung 32 in geodätischer Höhe, im bestimmungsgemäßen Einbauzustand des Verdichters, oberhalb der beiden Gleitlager 24,25 angeordnet. Mit anderen Worten erfolgt die Schmiermittelableitung in Schwerkraftrichtung oberhalb der Gleitlager 24, 25. Dies wirkt sich zusätzlich vorteilhaft auf die Entgasung des Schmiermittels aus. Für den Fall, dass noch Rest-Gasstoffe in dem Schmiermittel vorhanden sind, können diese hier zumindest teilweise ausgeschieden werden.

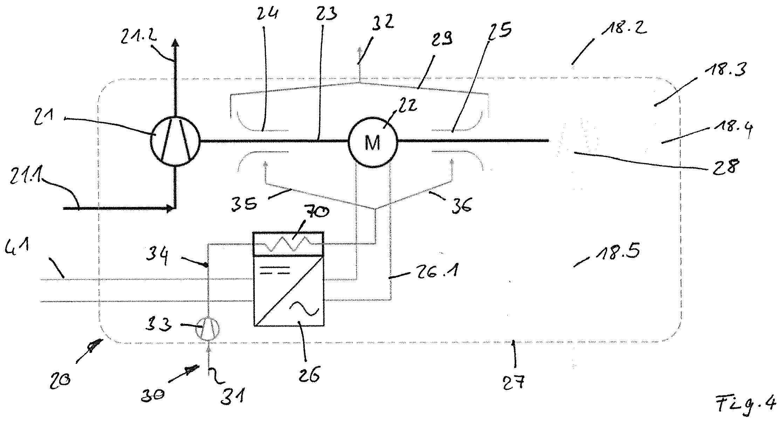

Figur 4 zeigt eine Weiterbildung der Erfindungsausgestaltung gemäß Figur 3. Wie diese Darstellung zeigt, ist der Leistungselektronik 26, welche den Motor 22 ansteuert, ein Wärmetauscher 70 zugeordnet. Dieser Wärmetauscher 70 kann unmittelbar auf die Leistungselektronik 26 aufgesetzt sein, wobei beispielsweise im Wärmetauscher rippenförmige Wärmetauscherlamellen vorgesehen sind, die mit wärmeerzeugenden Flächen der Leistungselektronik 26 verbunden sind. Die Wärmetauscherlamellen sind dann von dem strömenden Schmiermittel umspült, so dass hier ein Wärmetausch in das Schmiermittel hinein möglich wird.

Denkbar ist es auch, dass beispielsweise in dem Wärmetauscher 70 eine Kühlplatte vorhanden ist, die zum Beispiel mittels einer Paste mit hoher thermischer Leitfähigkeit mit der Leistungselektronik verbunden ist. Über die Kühlplatte kann das Schmiermittel zum Zweck des Wärmetauschers geleitet werden.

Der Wärmetauscher 70 kann in die Schmiermittelversorgung 30 integriert sein. Beispielsweise kann er, wie Figur 4 zeigt, an die Pumpleitung 34 angeschlossen werden und von dieser durchströmt werden, um die Verlustwärme der Leistungselektronik 26 in das Schmiermittel abzutauschen.

Im Anschluss an den Wärmetauscher 70 ist die Pumpleitung 34 wieder, wie bei Figur 3 an die beiden hydrodynamischen Gleitlager 24, 25 angeschlossen.

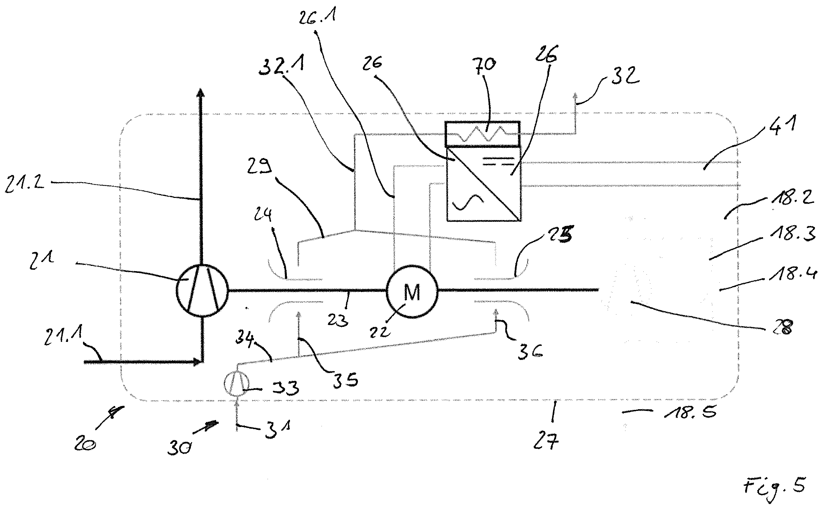

Figur 5 stellt eine Weiterbildung der Ausgestaltung nach Figur 4 dar. Dabei ist, wie bei Figur 4 der Leistungselektronik 26 ein Wärmetauscher 70 zugeordnet. Der Wärmetauscher ist nun jedoch in die Schmiermittelableitung 32 integriert und über einen Leitungsabschnitt 32.1 an den Sammler 29 angeschlossen.

Ebenso wie bei Figur 4 sind vorzugsweise auch in Figur 5 der Wärmetauscher 70 und die Leistungselektronik 26 im Verdichtergehäuse 27 angeordnet. Denkbar ist jedoch auch, dass eine oder beide dieser Einheiten außerhalb des Verdichtergehäuses 27 angeordnet sind.

Bei Figur 4 wird das Schmiermittel durch die Wärme der Leistungselektronik 26 vor Eintritt in die Gleitlager 24, 25 erwärmt.

Bei Figur 5 wird das von den Gleitlagern 24, 25 kommende Schmiermittel dem Wärmetauscher 70 zugeführt. Ist der Wärmetauscher 70 stromab der Gleitlager 24, 25 angeordnet, hat dies den Vorteil, dass die Gleitlager 24, 25 mit einer bei allen Betriebszuständen ähnlich temperierten Flüssigkeit geschmiert werden kann.

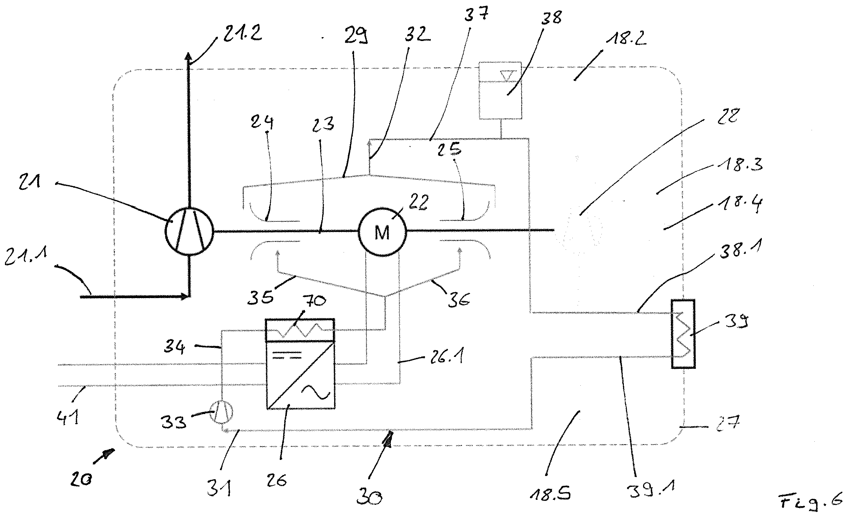

Figur 6 zeigt eine Ausgestaltung des Verdichters 20, ähnlich Figur 4. Wie diese Darstellung zeigt, ist vorzugsweise ein geschlossenes Kreislaufsystem für die Schmiermittelversorgung 30 vorgesehen. Dieses Kreislaufsystem 30 ist vollständig mit dem Schmiermittel gefüllt und entlüftet.

Entsprechend kann im Anschluss an die Schmiermittelableitung eine Leitung 38.1 angeschlossen. Diese kann beispielsweise zu einem Wärmetauscher 39 geführt sein. Der Wärmetauscher 39 kann jedoch auch an einer beliebigen anderen Stelle im Kreislaufsystem integriert sein.

Von dem Wärmetauscher 39 ist eine Leitung 39.1 zur Schmiermittelpumpe 33 zurückgeführt. Der Wärmetauscher 39 dient dazu Wärme aus dem Schmiermittel in die Umgebung zu übertragen. Damit kann das Temperaturniveau des Schmiermittels gesenkt werden.

Vorzugsweise ist, wie Figur 6 zeigt, das komplette Kreislaufsystem in dem Verdichtergehäuse 27 angeordnet. Auf diese Weise wird ein geschlossenes System gebildet, das keinen Anschluss an die Umgebung erfordert und somit eine einfache Montage und einen einfachen Betrieb ermöglicht.

Figur 6 zeigt weiter, dass in das Kreislaufsystem ein Ausgleichsbehälter 38 üblicher Bauweise integriert ist. Mit dem Ausgleichsbehälter 38 lassen sich temperaturbedingte Wärmedehnungen des Schmiermittels ausgleichen.

Ist ein geschlossener Schmiermittelkreislauf vorgesehen, wie Figur 6 zeigt, der in oder an dem Verdichtergehäuse 27 angeordnet ist, so muss für den Anschluss an die Brennstoffzelle 10 lediglich die Druckleitung 21.2 an die Brennstoffzelle 10 angekoppelt werden. Über die Bereichsgrenze des Verdichters 20 (gestrichelte Darstellung des Verdichtergehäuses 27 muss dann lediglich noch zusätzlich die Luftzuführung 21.2 geführt werden.

Wird die Verdichtervariante mit Turbine 28 verwirklicht, so müssen auch die Gasleitung 18.2 und die Gasführung 18.5 über die Bereichsgrenze geführt werden.

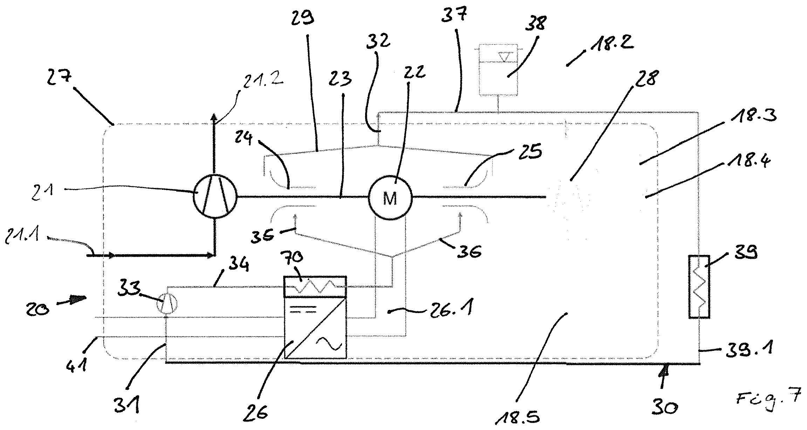

Wie Figur 7 zeigt, muss das Kreislaufsystem 30 jedoch nicht vollständig in das Verdichtergehäuse 27 oder an dem Verdichtergehäuse 27 vorhanden sein. Denkbar ist es auch, dass nur ein Teil des Kreislaufsystems 30 in oder an dem Verdichtergehäuse 27 geführt ist.

Insbesondere ist es denkbar, dass das Kreislaufsystem 30 an einen externen Wärmetauscher 39 angeschlossen ist. Dieser Wärmetauscher 39 kann beispielsweise auch Teil eines Kühlsystems eines Kraftfahrzeugs sein.

## Patentansprüche

1. Verdichter (20) zur Erzeugung einer Druckluftströmung für eine Brennstoffzelle (10), mit einem Verdichterelement (21), insbesondere einem Verdichterrad, wobei das Verdichterelement (21) mit einer Antriebswelle (23) drehfest gekoppelt ist, wobei die Antriebswelle (23) von einem Motor (22), insbesondere einem Elektromotor, angetrieben wird, wobei die Welle (23) mittels zumindest einem hydrodynamischen oder hydrostatischen Gleitlager (24, 25) drehbar gelagert ist, wobei das Gleitlager (24, 25) an eine Schmiermittelversorgung (30) angeschlossen ist, über die das Gleitlager (24, 25) mit einem Schmiermittel zur hydrodynamischen oder hydrostatischen Druckerzeugung versorgt wird, wobei das Schmiermittel Wasser oder ein Fluidgemisch, überwiegend aufweisend Wasser ist, wobei das Gleitlager (24, 25) einen Schmiermitteleintritt und einen Schmiermittelaustritt aufweist, wobei dem Gleitlager (24, 25) das Schmiermittel über den Schmiermitteleintritt zuleitbar und über den Schmiermittelaustritt das Schmiermittel vom Gleitlager (24, 25) ableitbar ist, und wobei im Bereich des Schmiermittelaustritts ein Ableitbereich des Kreislaufsystems (30) angeordnet ist,
**dadurch gekennzeichnet,**
**dass** der gesamte Austrittsquerschnitt des Flüssigkeitsaustritts des Gleitlagers (24, 25) vollständig von dem im Ableitbereich gehaltenen Schmiermittel bedeckt ist.

2. Verdichter (20) nach Anspruch 1, **dadurch gekennzeichnet, dass** die Schmiermittelversorgung (30) vollständig mit Schmiermittel gefüllt und entlüftet ist.

3. Verdichter (20) nach Anspruch 2, **dadurch gekennzeichnet, dass** das Kreislaufsystem (30) einen Entlüftungsanschluss, zum Anschluss einer Entlüftungsleitung aufweist.

4. Verdichter (20) nach einem der Ansprüche 1 bis 3, **dadurch gekennzeichnet, dass** die Schmiermittelversorgung (30) ein geschlossenes Kreislaufsystem bildet.

5. Verdichter (20) nach einem der Ansprüche 1 bis 4, **dadurch gekennzeichnet, dass** das Schmiermittel derart unter Druck gehalten ist, dass der Schmiermitteldruck im Bereich des Austrittsquerschnitts des Flüssigkeitsaustritts des Gleitlagers (24, 25) größer ist als der Umgebungsdruck, und dass der Schmiermitteldruck zumindest im Bereich des Austrittsquerschnitts vorzugsweise zumindest 0,5 bar und weiter bevorzugt maximal 5 bar beträgt.

6. Verdichter (20) nach einem der Ansprüche 1 bis 5, **dadurch gekennzeichnet, dass** eine Entgasungseinrichtung vorgesehen ist, der das vom Schmiermittelaustritt des Gleitlagers (24, 25) abgeführte Schmiermittel zugeleitet ist, und dass in der Entgasungseinrichtung das im Schmiermittel transportierte Gas zumindest teilweise aus dem Schmiermittel abgeschieden wird.

7. Verdichter (20) nach einem der Ansprüche 1 bis 6, **dadurch gekennzeichnet, dass** das zumindest eine Gleitlager (24, 25) in einem Lagergehäuse angeordnet ist, und dass eine Schmiermittelzuleitung (31) der Schmiermittelversorgung (30) in Schwerkraftrichtung unterhalb des Gleitlagers (24, 25) dem Gleitlager (24, 25) das Schmiermittel zuführt.

8. Verdichter (20) nach einem der Ansprüche 1 bis 7, **dadurch gekennzeichnet, dass** das zumindest eine Gleitlager (24, 25) in einem Lagergehäuse angeordnet ist, dass das Schmiermittel über eine Schmiermittelableitung (32) abgeleitet wird, und dass die Schmiermittelableitung (32) das Schmiermittel in Schwerkraftrichtung oberhalb des Gleitlagers (24, 25) von dem Gleitlager (24, 25) ableitet.

9. Verdichter (20) nach einem der Ansprüche 1 bis 8, **dadurch gekennzeichnet, dass** eine Schmiermittelpumpe (33) vorgesehen ist, die dem zumindest einen Gleitlager (24, 25) das Schmiermittel zufördert, und dass die Schmiermittelpumpe (33) in geodätischer Höhe unterhalb des Gleitlagers (24, 25) angeordnet ist.

10. Verdichter (20) nach einem der Ansprüche 1 bis 9, **dadurch gekennzeichnet, dass** das zumindest eine Gleitlager (24, 25) fluidisch mit einem Wärmetauscher (39) verbunden ist, um dem Schmiermittel Wärme zu entziehen.

11. Verdichter (20) nach einem der Ansprüche 1 bis 10, **dadurch gekennzeichnet, dass** in einem Verdichtergehäuse (27) das Verdichterelement (21) und die Antriebswelle (23) sowie der Motor (22), insbesondere der Elektromotor angeordnet sind, dass die Schmiermittelversorgung (30) ein geschlossenes Kreislaufsystem mit einer Schmiermittelpumpe (33) bildet, und dass das Kreislaufsystem in oder an dem Verdichtergehäuse (27) verbaut ist.

12. Verdichter (20) nach einem der Ansprüche 1 bis 11, **dadurch gekennzeichnet, dass** der als Elektromotor ausgebildete Motor (22) zum Antrieb des Verdichterelements (21) an eine Leistungselektronik (26) angeschlossen ist, wobei die Leistungselektronik (26) vorzugsweise an oder in dem Verdichtergehäuse (27) befestigt ist, wobei der Leistungselektronik (26) ein Wärmetauscher (70) zugeordnet ist, der in wärmetauschendem Kontakt mit einem wärmeerzeugenden Bereich der Leistungselektronik (26) steht, und dass in Strömungsrichtung nach dem Wärmetauscher (70) dem oder den Gleitlager/-n (24, 25) das Schmiermittel als Kühlmittel zugeleitet ist.

13. Verdichter (20) nach einem der Ansprüche 1 bis 12, **dadurch gekennzeichnet, dass** dem als Elektromotor ausgebildeten Motor (22) zum Antrieb des Verdichterelements (21) ein Wärmetauscher (70) zugeordnet ist, und dass durch diesen Wärmetauscher (70) das dem oder den Gleitlager/-n (24, 25) zugeleitete oder das von den Gleitlagern (24, 25) abgeleitete Schmiermittel als Kühlmittel zugeleitet ist.

14. Verdichter (20) nach einem der Ansprüche 1 bis 13, **dadurch gekennzeichnet, dass** das oder die Gleitlager (24, 25) als hydrodynamische Gleitlager (24, 25) ausgebildet ist/sind, wobei das oder die hydrodynamischen Gleitlager (24, 25) einen Rotor und einen Stator aufweisen, wobei der Rotor gegenüber dem Stator drehbar ist, wobei eine Rotor-Lagerfläche einer Gegenfläche des Stators zur hydrodynamischen Druckerzeugung im Bereich eines konvergierenden Spaltes gegenübersteht, dass die Rotor-Lagerfläche und/oder die Gegenfläche bei einem Schnitt längs und durch die Rotationsachse in Schnittansicht, eine durchgehende Lagerkontur bildet, die aus wenigstens zwei Konturabschnitten gebildet ist, die als Gerade und Wölbung oder als Wölbungen ausgebildet sind, um hydrodynamische Tragfähigkeiten in radialer und axialer Richtung zu erzeugen, wobei vorzugsweise vorgesehen ist, dass die Lagerkontur bei einem Schnitt längs und durch die Rotationsachse in Schnittansicht, längs der Rotationsachse stetig differenzierbar ist.

15. Verdichter (20) nach Anspruch 14, **dadurch gekennzeichnet, dass** die Rotor-Lagerfläche (13) und die Gegenfläche (21) des oder der Gleitlager (24, 25) ein Mehrflächengleitlager bilden.

16. Verdichter (20) nach einem der Ansprüche 1 bis 15, **dadurch gekennzeichnet, dass** das Verdichterelement (21) im Bereich einer Luftführung gehalten ist, die eine Luftzuführung (21.1) und stromab des Verdichterelements (21) eine Druckleitung (21.2) aufweist, über die die vom Verdichterelement (21) erzeugte Druckluft abführbar ist, dass die Welle (23) aus einem Lagergehäuse, in dem das oder die Gleitlager (24, 25) angeordnet ist/sind herausgeführt und in den Bereich der Luftführung geführt ist, und dass der Wellendurchtritt von dem Lagergehäuse in den Bereich der Luftführung mittels einer Kombination, bestehend aus einer Gleitringdichtung und einer gasdynamischen Dichtung, abgedichtet ist.
